Europäisches Patentamt

European Patent Office

Office européen des brevets

(11) Veröffentlichungsnummer: **0 208 834**
**B1**

# EUROPÄISCHE PATENTSCHRIFT

(45) Veröffentlichungstag der Patentschrift:
05.09.90

(51) Int. Cl.⁵: **H04B 3/10**

(21) Anmeldenummer: 86103535.0

(22) Anmeldetag: 15.03.86

(54) Breitbandkommunikationskabelnetz.

(30) Priorität: 19.07.85 DE 3525849

(43) Veröffentlichungstag der Anmeldung:
21.01.87 Patentblatt 87/4

(45) Bekanntmachung des Hinweises auf die Patenterteilung:
05.09.90 Patentblatt 90/36

(84) Benannte Vertragsstaaten:
AT CH DE LI NL

(56) Entgegenhaltungen:
DE-A- 2 304 686
GB-A- 1 442 098

FUNKSCHAU, Heft 25, 1982, Franzis-Verlag GmbH
München; Dipl.-Ing. Erdal Afsar
"Breitbandkommunikationssystem", Seiten 75-78

(73) Patentinhaber: ROBERT BOSCH GMBH, Postfach 50,
D-7000 Stuttgart 1(DE)

(72) Erfinder: Afsar, Erdal, Dipl.-Ing., Am Schülerheim 15,
D-1000 Berlin 33(DE)

(74) Vertreter: Schmidt, Hans-Ekhardt, Robert Bosch GmbH
Geschäftsbereich Elektronik Patent- und
Lizenzabteilung Forckenbeckstrasse 9-13,
D-1000 Berlin 33(DE)

**Beschreibung**

Stand der Technik

Die Erfindung geht von einem Breitbandkommunikationskabelnetz nach der Gattung des Anspruchs 1 aus.

Es sind Breitbandkommunikationskabelnetze bekannt (Funkschau, 1982, Heft 25, Seite 75), in denen die zu übertragenden frequenzmultiplexen Signale mit verhältnismäßig geringem Betriebspegel über das kaskadierte Strecken- bzw. Linienverstärker enthaltende Primär- und Sekundärnetz übertragen werden. An bestimmten Stellen des Kabelnetzes werden die Signale mittels Verteilverstärker abgezweigt und verstärkt und anschließend mit verhältnismäßig hohem Pegel passiv an die einzelnen Übergabepunkte bzw. Teilnehmer weitergeleitet. Da möglichst viele Teilnehmer versorgt werden müssen, werden die Verteilverstärker üblicherweise so weit ausgesteuert, daß die durch diese Verstärker verursachten Verzerrungen die Systemdaten des Kabelnetzes wesentlich mitbestimmen. Soll nun ein bestehendes Breitbandkommunikationskabelnetz ausgebaut, das heißt nachträglich durch weitere Hochfrequenzkanäle ergänzt werden, so würde dies zu einer höheren Dämpfung führen, die nur durch einen höheren Verteilpegel der Verteilverstärker ausgeglichen werden könnte. Damit würde sich jedoch der Störabstand und damit auch der maximal zulässige Verteilpegel verringern. Eine Abhilfe könnte zum Beispiel durch Leistungverdopplung erfolgen, wodurch sich jedoch der Strombedarf erheblich erhöhen würde.

Weiterhin ist aus der GB-A 1 442 098 ein Datenübertragungssystem bekannt, bei dem eine central processing unit Datensignale in eine Übertragungsleitung einspeist. An die Datenleitung sind über Koppler und Verstärker Terminals angeschlossen. Den Verstärkern ist eine Vorrichtung zur automatischen Verstärkungsregelung vorgeschaltet, die dafür sorgt, daß trotz unterschiedlicher Übertragungsleitungslängen der Ausgangspegel der Verstärker gleich ist. Ferner ist ein Nachrichtenübertragungssystem bekannt (DE-A 12 304 686), bei dem mit Hilfe von zwei Pilotfrequenzen, die mit vorgegebenen Pegeln in ein Übertragungsnetz eingespeist werden, die Verstärker des Übertragungsnetzes geregelt werden. Zu diesem Zweck werden in den Verstärkern die Pilotfrequenzen ausgefiltert und aus den Pilotfrequenzen Steuerspannungen gewonnen, die die Verstärkung der Verstärker beeinflussen.

Vorteile der Erfindung

Das erfindungsgemäße Breitbandkommunikationskabelnetz mit den kennzeichnenden Merkmalen des Anspruchs 1 hat den Vorteil, daß der Verteilpegel bei gleichbleibendem Teilnehmerpegel verringert werden kann, wodurch nichtlineare Verzerrungen vermieden werden und der Strombedarf für die Verstärker nur unwesentlich ansteigt. Besonders vorteilhaft ist ein erfindungsgemäßes Breitbandkommunikationskabelnetz, bei dem die Regelung der Verteilverstärker unter Verwendung von einer oder zwei über das Kabelnetz übertragenen Pilotfrequenzen erfolgt. Damit ergibt sich eine ausreichend genaue Regelung der Verstärkung des Verteilverstärkers.

Zeichnung

Ein Ausführungsbeispiel der Erfindung ist in der Zeichnung anhand mehrerer Figuren dargestellt und in der nachfolgenden Beschreibung näher erläutert. Die Zeichnung zeigt in

Fig. 1 eine schematische Darstellung eines Ausschnitts aus einem erfindungsgemäßen Breitbandkommunikationskabelnetz und

Fig. 2 ein Blockschaltbild eines in einer Regelschleife liegenden Verteilverstärkers.

Beschreibung der Erfindung

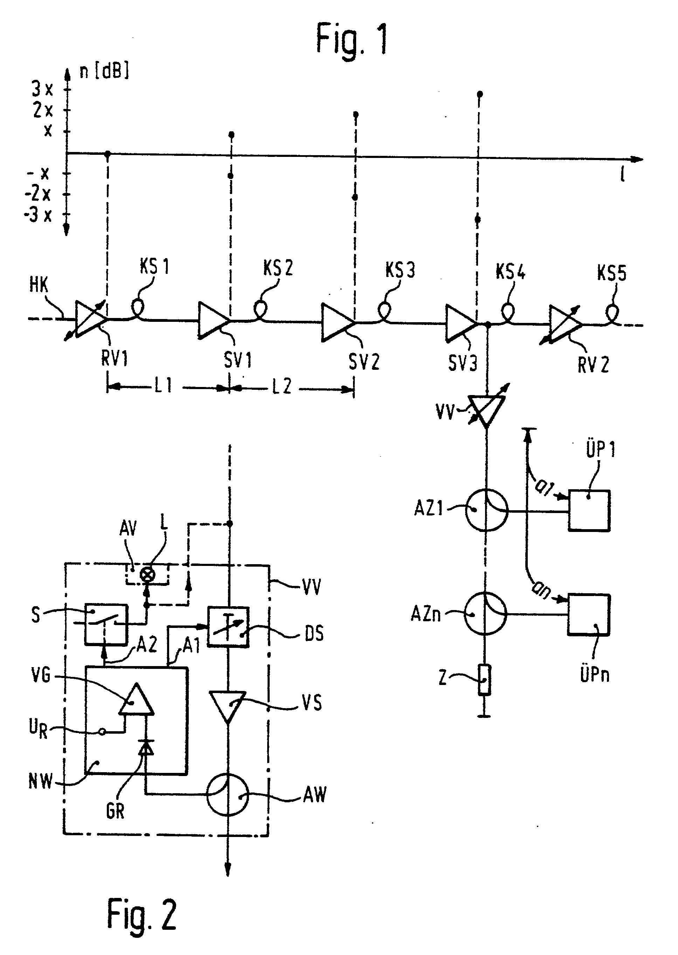

In Fig. 1 bezeichnet HK ein Hochfrequenzkabel eines erfindungsgemäßen Breitbandkommunikationskabelnetzes. Im Zuge des Hochfrequenzkabels liegen in Kaskade mehrere geregelte Streckenverstärker RV1, RV2 ... und zwischen je zwei geregelten Streckenverstärkern ein oder mehrere ungeregelte Streckenverstärker SV1, SV2, SV3. Die zwischen den aufeinanderfolgenden Verstärkern liegenden Kabellängen sind durch Kabelschleifen KS1 ... KS5 angedeutet. Hinter dem Streckenverstärker SV3 ist ein Verteilverstärker VV abgezweigt, an den sich eine Reihe von Abzweigern AZ1 .. AZn und am Ende ein mit Masse verbundener Abschlußwiderstand Z anschließen. Mit jedem Abzweiger ist ein Übergabepunkt ÜP1 ... ÜPn verbunden, an den sich ein oder mehrere Teilnehmer des Breitbandkommunikationskabelnetzes anschließen.

Im Primär- und Sekundärnetz des Breitbandkommunikationskabelnetzes werden die durch Temperatureinflüsse (Sommer und Winter) hervorgerufenen Pegelunterschiede in bestimmten Abständen des Kabelnetzes mit Hilfe der geregelten Streckenverstärker RV1, RV2 ... korrigiert. Auf dem Weg zwischen zwei geregelten Streckenverstärkern RV1, RV2 bauen sich jedoch Pegelfehler auf. Wenn zum Beispiel eine Feldlänge l1 einen Pegelfehler von ± x dB verursacht und die Feldlängen annähernd gleich sind, dann kann beispielsweise am Ausgang des auf den ersten geregelten Streckenverstärker RV1 folgenden dritten ungeregelten Streckenverstärkers RV3 eine Pegelabweichung von ± 3x dB entstehen; vgl. hierzu Verlauf des Pegels n in Abhängigkeit von der Kabellänge l oberhalb des Blockschaltbildes in Fig. 1. Ist beispielsweise die maximale Dämpfung zwischen dem Ausgang des Verteilverstärkers VV und dem Übergabepunkt ÜPn gleich $a_{max}$ und steht diesem Übergabepunkt ein Mindestpegel $n_{min}$ gleich $n_{ÜP}$ zu, so muß auch bei einem möglichen Unterpegel der am Ausgang des Verteilverstärkers vorhandene Pegel $n_a = a_{max} + n_{ÜP}$ betragen.

Für die Signalverzerrungen des Verteilverstärkers VV ist der maximal auftretende Pegel $n_{max}$ ausschlaggebend. Allgemein gelten die Beziehungen:

$n_{max} = n_{Nenn}$ + Toleranzwert

$n_{min} = n_{Nenn}$ - Toleranzwert

$n_{max} = n_{min} + 2 \cdot$ Toleranzwert.

In dem Beispiel nach Fig. 1 beträgt die Pegeltoleranz am Verteilverstärker VV ± 3x dB. Der maximale Pegel $n_{max}$ eines ungeregelten Verteilverstärkers würde somit $n_{max} = n_{min} + 6x$ betragen.

Nach der Erfindung gehört jedoch zu dem Verteilverstärker VV eine Regelschleife; vgl. Fig. 2. In diesem Fall hat der Verteilverstärker VV vorzugsweise folgenden Aufbau. Der Eingang steht über einen Dämpfungssteller DS, einen HF-Verstärker VS und einen Abzweiger AW mit dem Ausgang des Verteilverstärkers in Verbindung. Von dem Abzweiger AW zweigt eine Leitung ab, die an ein Netzwerk NW geführt. Das Netzwerk enthält eine Gleichrichterschaltung GR und eine Vergleichsvorrichtung VG, der eine Referenzspannung $U_R$ zugeführt wird. Das Netzwerk weist einen Ausgang A1 auf, der mit einem Steuereingang des Dämpfungsstellers DS verbunden ist, so daß die aus Dämpfungssteller DS, Verstärker VS, Abzweiger AW und Netzwerk NW gebildete Regelschleife geschlossen ist.

Durch die beschriebene Regelschleife wird die Pegelabweichung am Verteilverstärker auf Null reduziert. Der geregelte Verteilverstärker braucht also gegenüber einem ungeregelten Verteilverstärker nur um 6x dB weniger ausgesteuert zu werden, wenn man von dem oben genannten Beispiel für den maximalen Pegel $n_{max}$ ausgeht. In der Praxis läßt sich durch den Einsatz eines geregelten Verteilverstärkers VV die Aussteuerung des Verstärkers um zwei bis drei dB gegenüber einem ungeregelten Verteilverstärker verringern. Die Regelung erfolgt vorzugsweise nach Art einer Pilotfrequenzregelung, bei der in bekannter Weise eine Pilotfrequenz oder zwei Pilotfrequenzen über das Kabelnetz mitübertragen werden. Die Pilotfrequenz(en) wird (werden) im Verteilverstärker VV erkannt und ihre Pegel mit je einem Sollpegel verglichen. Eine der Differenz zwischen Soll- und Ist-Pegel entsprechende elektrische Größe wird dann als Stellgröße dem Dämpfungssteller DS zugeführt. Es kann auch vorteilhaft sein, anstelle der beiden Pilotfrequenzen modulierte Nutzsignale zu verwenden. Schließlich kann auch in vorteilhafter Weise das Ausgangssignal der Vergleichseinrichtung VG als Kriterium für den Funktionszustand des Verteilverstärkers VV dienen. Die Vergleichsvorrichtung VG nach Fig. 2 weist noch einen zweiten Ausgang A2 auf. An diesem Ausgang gibt die Vergleichsvorrichtung ein Schaltsignal ab, das das Funktionieren oder Nichtfunktionieren des Verteilverstärkers kennzeichnet. Dieses Signal steuert einen Schalter S, der im Stromkreis einer elektrischen Anzeigevorrichtung AV liegt. Die Anzeigevorrichtung besteht beispielsweise aus einer Lichtquelle L, vorzugsweise einer Leuchtdiode. Die Anzeigevorrichtung ist in dem Gehäuse des Verteilverstärkers VV angeordnet und kommt bei funktionierendem oder nichtfunktionierendem Verteilverstärker zur Wirkung. Das elektrische Signal kann jedoch auch in geeigneter Form in das Kabelnetz übertragen werden (vgl. die aus dem Verteilverstärker austretende gestrichelte Linie), um zum Beispiel in einer in der Zeichnung nicht gezeigten Kopfstation eine entsprechende Anzeige auszulösen.

## Patentansprüche

1. Breitbandkommunikationskabelnetz, das kaskadierte Streckenverstärker (RV1, SV1) und Linienverstärker mit geregelter und ungeregelter Verstärkung sowie von diesen Verstärkern abgezweigte Verteilverstärker (VV) aufweist, dadurch gekennzeichnet, daß die Verteilverstärker (VV) je eine Regelschleife (AW, NW, DS) aufweisen, die die Ausgangspegel der Verteilverstärker weitgehend konstant halten.

2. Breitbandkommunikationskabelnetz nach Anspruch 1, dadurch gekennzeichnet, daß die Regelung der Verteilverstärker (VV) unter Verwendung einer über das Kabelnetz übertragenen Pilotfrequenz erfolgt.

3. Breitbandkommunikationskabelnetz nach Anspruch 1, dadurch gekennzeichnet, daß die Regelung der Verteilverstärker (VV) unter Verwendung von zwei über das Kabelnetz übertragenen Pilotfrequenzen erfolgt.

4. Breitbandkommunikationskabelnetz nach Anspruch 2 oder 3, dadurch gekennzeichnet, daß die Pilotfrequenzen durch modulierte Nutzsignale ersetzt sind.

5. Breitbandkommunikationskabelnetz nach einem der Ansprüche 2 bis 4, dadurch gekennzeichnet, daß die in der Regelschleife gebildete Stellgröße gleichzeitig zur Überwachung des Funktionszustandes des Verteilverstärkers (VV) verwendet wird.

## Claims

1. A cable network for broad-band communication, which has cascaded path amplifiers (RV1, SV1) and line amplifiers having controlled and uncontrolled amplification and distributing amplifiers (VV) which branch off from these amplifiers, characterised in that the distributing amplifiers (VV) each have a control loop (AW, NW, DS) which keeps the output levels of the distributing amplifiers substantially constant.

2. A cable network for broad-band communication as claimed in claim 1, characterised in that the distributing amplifiers (VV) are controlled using a pilot frequency transmitted by way of the cable network.

3. A cable network for broad-band communication as claimed in claim 1, characterised in that the distributing amplifiers (VV) are controlled using two pilot frequencies transmitted by way of the cable network.

4. A cable network for broad-band communication as claimed in claim 2 or 3, characterised in that the pilot frequencies are replaced by modulated working signals.

5. A cable network for broad-band communication as claimed in any of claims 2 to 4, characterised in that the adjusting variable formed in the control loop is simultaneously used to monitor the functional state of the distributing amplifier (VV).

**Revendications**

1. Réseau de communication par câble à bande large qui comporte des amplificateurs intermédiaires (RV1, SV1) en cascade et des amplificateurs de ligne à amplification réglée et non réglée ainsi que des amplificateurs-répartiteurs (VV) dérivant de ces amplificateurs, caractérisé en ce que les amplificateurs-répartiteurs (VV) présentent chaque fois une boucle de régulation (AW, NW, DS) qui maintient très largement constant le niveau de sortie des amplificateurs-répartiteurs.

2. Réseau de communication par câble à bande large selon la revendication 1, caractérisé en ce que la régulation des amplificateurs-répartiteurs (VV) se fait en utilisant une fréquence-pilote transmise par le réseau de câble.

3. Réseau de communication par câble à bande large selon la revendication 1, caractérisé en ce que la régulation des amplificateurs-répartiteurs (VV) se fait en utilisant deux fréquence-pilotes transmises par le réseau de câble.

4. Réseau de communication par câble à bande large selon la revendication 2 ou 3, caractérisé en ce que les fréquences-pilotes sont remplacées par des signaux utiles modulés.

5. Réseau de communication par câble à bande large selon l'une des revendications 2 à 4, caractérisé en ce que les grandeurs de réglage formées dans la boucle de régulation servent en même temps à surveiller l'état de fonctionnement de l'amplificateur-répartiteur (VV).

# Fig. 1

# Fig. 2